# EUROPÄISCHE PATENTSCHRIFT

(11) **EP 3 094 913 B1**
(45) Veröffentlichungstag und Bekanntmachung des Hinweises auf die Patenterteilung: **18.09.2019**
(21) Anmeldenummer: 14821551.0
(22) Anmeldetag: 15.12.2014
(51) Int. Cl.: F16N 21/00

(54) **SCHMIERSTOFFLEITENDER X-RING**
LUBRICANT-CONDUCTING X-RING
BAGUE EN X DE CONDUCTION DE LUBRIFIANT

(30) Priorität: 17.01.2014 DE 102014200863
(43) Veröffentlichungstag der Anmeldung: 23.11.2016
(73) Patentinhaber: ZF Friedrichshafen AG, 88046 Friedrichshafen (DE); ZF Wind Power Antwerpen NV, 3920 Lommel (BE)
(72) Erfinder: LEIMANN, Dirk, B-2650 Edegem (BE)
(86) Internationale Anmeldenummer: PCT/EP2014/077710
(87) Internationale Veröffentlichungsnummer: WO 2015/106901

(56) Entgegenhaltungen:
- WO-A1-2011/050837
- DE-A1- 2 119 468
- DE-A1- 19 916 106

## Beschreibung

Die Erfindung betrifft eine schmierstoffleitende Vorrichtung nach dem Oberbegriff von Anspruch 1.

Derartige Elemente werden verwendet, um Schmierstoff zwischen zwei Getriebeteilen zu leiten, wobei eins der Getriebeteile drehfest angeordnet ist und das andere Getriebeteil rotiert. Beide Getriebeteile weisen jeweils einen Schmierstoffkanal auf. Das schmierstoffleitende Element dient dazu, eine schmierstoffleitende Verbindung zwischen den beiden Schmierstoffkanälen herzustellen.

Aus der Druckschrift EP 1 488 139 B1 ist ein schmierstoffleitender Ring mit einem U-förmigen Querschnitt bekannt. Der Ring verbindet zwei gegeneinander rotierende Getriebeteile schmierstoffleitend miteinander. Mit einem ersten Getriebeteil ist der Ring fix verbunden. Ein zweites Getriebeteil weist eine umlaufende Nut auf. In diese greift der Ring derart ein, dass der Ring mit der Nut einen Hohlraum umschließt. Der Hohlraum dient dazu, Schmierstoff zwischen einem ersten, in den Ring mündenden Schmierstoffkanal und einem zweiten, in die Nut mündenden Schmierstoffkanal zu leiten.

Die in der Druckschrift EP 1 488 139 A1 beschriebene schmierstoffleitende Verbindung hält Drücken von etwa 1 bis 1,5 bar stand. In Windkraftgetrieben kommen aber vermehrt hydrostatische Gleitlager zum Einsatz. Deren Schmierung erfordert Drücke von weit mehr als 1,5 bar. So werden in Windkraftgetrieben verwendete hydrostatische Gleitlager üblicherweise mit einem Druck im Bereich von 6 bar geschmiert. Weiterhin kommt es durch die Belastung des Getriebes bei Windkraftanlagen zu starken translatorischen Relativbewegungen zwischen den genannten Getriebeteilen. Der in der Druckschrift EP 1 488 139 A1 beschriebenen schmierstoffleitenden Ring ist nicht in der Lage, diese Relativbewegungen auszugleichen. Infolgedessen treten Undichtigkeiten auf.

Die Druckschrift DE 199 16 106 A1 offenbart ein Maschinenelement zur Durchführung von Medien über zwei sich relativ züinander rotierenden Maschinenteilen mit einer zwischen den Maschinenteilen liegenden durchbohrten Dichtung, bestehend aus mindestens zwei sich symmetrisch gegenüberliegenden Dichtlippenpaaren mit dazwischen liegenden Bohrungen, die die beiden ringförmigen Räume zwischen den beiden Dichtlippenpaaren miteinander verbinden. Die Maschinenteile weisen Labyrinth artige Nuten oder Vertiefungen mit je einer Bohrung zur Durchführung eines Mediums auf, in deren Nuten mindestens ein Dichtlippenpaar der sich zwischen den beiden Maschinenteilen befindlichen Dichtung statisch oder dynamisch abdichtend hineinragt. Zwischen den beiden Dichtlippenpaaren befinden sich die Bohrungen der beiden Teile auf konzentrischen Zylindern.

Aufgabe der Erfindung ist es, zwei Getriebeteile, insbesondere Getriebeteile einer Windkraftanlage, wobei mindestens eins der Getriebeteile drehbar gelagert ist, unter Umgehung der den aus dem Stand der Technik bekannten Lösungen innenwohnenden Nachteile schmierstoffleitend miteinander zu verbinden. Die Verbindung soll insbesondere hohem Schmierstoffdruck standhalten.

Ein schmierstoffleitendes Element weist ein erstes Seitenstück, das eine erste Dichtlippe ausbildet, und ein zweites Seitenstück, das eine zweite Dichtlippe ausbildet, auf. Ein Zwischenstück des schmierstoffleitenden Elements verbindet das erste Seitenstück mit dem zweiten Seitenstück. Das erste Seitenstück geht also entlang einer ersten Schnittfläche in das Zwischenstück über. Entsprechend geht das zweite Seitenstück entlang einer zweiten Schnittfläche in das Zwischenstück über. Die erste Schnittfläche bezeichnet dabei eine durch das schmierstoffleitende Element verlaufende gemeinsame Fläche des ersten Seitenstücks und des Zwischenstücks; die zweite Schnittfläche bezeichnet eine durch das schmierstoffleitende Element verlaufende gemeinsame Fläche des zweiten Seitenstücks und des Zwischenstücks.

Zum Leiten von Schmierstoff ist das Zwischenstück mit mindestens einem Loch versehen.

Das erste Seitenstück, das zweite Seitenstück und das Zwischenstück sind so angeordnet, dass sie einen ersten Hohlraum bilden. In diesen Hohlraum mündet das Loch in dem Zwischenstück. Das Loch stellt also eine Öffnung des Hohlraums dar. Darüber hinaus weist der Hohlraum eine weitere, von dem Loch verschiedene erste Öffnung bzw. Mündung auf. Ein derartiger, mit einer Mündung versehender Hohlraum kann auch als Ausnehmung oder Vertiefung bezeichnet werden.

Das erste Seitenstück, das zweite Seitenstück, die erste Dichtlippe, die zweite Dichtlippe, das Zwischenstück, die erste Schnittfläche, die zweite Schnittfläche, der erste Hohlraum und die erste Öffnung verlaufen rotationssymmetrisch um eine gemeinsame Symmetrieachse.

Bis hierher entspricht das schmierstoffleitende Element dem aus der Druckschrift EP 1 488 139 A1 bekannten schmierstoffleitenden Ring. Bei oben beschriebenen Teil des schmierstoffleitenden Elements handelt es sich also um einen Ring mit U-förmigem Querschnitt. Dabei bilden das erste Seitenstück und das zweite Seitenstück die Schenkel des U's. Den Boden des U's bildet das Zwischenstück.

Der Erfindung liegt die Idee zugrunde, das beschriebene U in seinem Boden zu spiegeln. Auf diese Weise entsteht ein ringförmiges Element, dessen Querschnitt zwei U-förmige Bereiche aufweist, die spiegelsymmetrisch zueinander sind und einen gemeinsamen Boden aufweisen. Das erfindungsgemäße schmierstoffleitende Element ist so in der Lage, translatorische Relativbewegungen zwischen den Getriebeteilen mit doppelter Amplitude auszugleichen. Weiterhin ist es möglich, den Boden so zu verkürzen, dass sich die Form des Querschnitts einem X annähert. Dies verbessert, wie nachfolgend beschrieben, die Resistenz des schmierstoffleitenden Elements gegenüber hohem Druck.

Das schmierstoffleitende Element weist ein drittes Seitenstück, das eine dritte Dichtlippe ausbildet, und ein viertes Seitenstück, das eine vierte Dichtlippe ausbildet, auf. Das Zwischenstück verbindet nicht nur das erste Seitenstück mit dem zweiten Seitenstück, sondern auch das dritte Seitenstück mit dem vierten Seitenstück. Entsprechend geht das dritte Seitenstück entlang einer dritten Schnittfläche in das Zwischenstück über. Das vierte Seitenstück geht entlang einer vierten Schnittfläche in das Zwischenstück über. Die dritte Schnittfläche bezeichnet dabei eine durch das schmierstoffleitende Element verlaufende gemeinsame Fläche des dritten Seitenstücks und des Zwischenstücks; die vierte Schnittfläche bezeichnet eine durch das schmierstoffleitende Element verlaufende gemeinsame Fläche des vierten Seitenstücks und des Zwischenstücks.

Vorzugsweise ist das schmierstoffleitende Element einstückig ausgebildet.

Ein zweiter Hohlraum wird von dem dritten Seitenstück, dem vierten Seitenstück und dem Zwischenstück gebildet. Der zweite Hohlraum weist eine zweite, von dem Loch. verschiedene Öffnung bzw. Mündung auf. Ein derartiger, mit einer Mündung versehender Hohlraum kann auch als Ausnehmung oder Vertiefung bezeichnet werden.

Das Loch in dem Zwischenstück ist durchgängig, verbindet also den ersten Hohlraum und den zweiten Hohlraum schmierstoffleitend miteinander. Insbesondere mündet das Loch auch in den zweiten Hohlraum.

Das erste Seitenstück, das zweite Seitenstück, das dritte Seitenstück, das vierte Seitenstück, die erste Dichtlippe, die zweite Dichtlippe, die dritte Dichtlippe, die vierte Dichtlippe, das Zwischenstück, die erste Schnittfläche, die zweite Schnittfläche, die dritte Schnittfläche, die vierte Schnittfläche, der erste Hohlraum, der zweite Hohlraum, die erste Öffnung und die zweite Öffnung verlaufen rotationssymmetrisch um eine gemeinsame Symmetrieachse. Die Symmetrieeigenschaft betrifft dabei nicht das Loch. Dies bedeutet, das Zwischenstück ist ohne das Loch um die gemeinsame Symmetrieachse rotationssymmetrisch. Das Zwischenstück wird also von einem rotationssymmetrisch um die gemeinsame Symmetrieachse verlaufenden Element gebildet, in welches das Loch eingebracht wurde. Die rotationssymmetrisch verlaufende erste Öffnung und die rotationssymmetrisch verlaufende zweite Öffnung können auch als Rinnen bezeichnet werden.

Die erste Dichtlippe und die zweite Dichtlippe sind vorzugsweise so angeordnet, dass sie entlang der ersten Öffnung verlaufen. Dies bedeutet, dass sich die erste Öffnung innerhalb eines Zwischenraums zwischen der ersten Dichtlippe und der zweiten Dichtlippe erstreckt. Die erste Öffnung verläuft insbesondere zwischen der ersten Dichtlippe und der zweiten Dichtlippe. Die erste Dichtlippe und die zweite Dichtlippe bilden beziehungsweise umschließen also die erste Öffnung.

Gleiches gilt mutatis mutandis für die zweite Öffnung, die dritte Dichtlippe und die vierte Dichtlippe.

Eine derartige Anordnung der beiden Öffnungen der Hohlräume und der Dichtlippen ermöglicht es, die Hohlräume vollständig, das heißt bis zu deren Öffnungen, mit Schmierstoff zu füllen.

Das schmierstoffleitende Element kann verschiedenartig ausgerichtet werden. In einer bevorzugten Ausführungsform der Erfindung ist das schmierstoffleitende Element radial ausgerichtet. Die Schmierstoffleitung erfolgt dabei in radialer Richtung, das heißt orthogonal zu der gemeinsamen Symmetrieachse. Ein erster Bereich des schmierstoffleitenden Elements, bestehend aus dem ersten Seitenstück, der ersten Dichtlippe, dem zweiten Seitenstück und der zweiten Dichtlippe, verläuft dabei in radialer Richtung um einen zweiten Bereich des schmierstoffleitenden Elements bzw. außerhalb des zweiten Bereich, beziehungsweise umgibt den zweiten Bereich, wobei der zweite Bereich aus dem dritten Seitenstück, der dritten Dichtlippe, dem vierten Seitenstück und der vierten Dichtlippe besteht. Zwischen den beiden Bereichen ist das Zwischenstück angeordnet.

Eine derartige Ausführungsform zeichnet sich dadurch aus, dass die erste Öffnung und die zweite Öffnung jeweils die Form einer Mantelfläche eines Drehzylinders bzw. geraden Kreiszylinders haben. Dabei bildet die gemeinsame Symmetrieachse auch die Symmetrieachse der beiden Drehzylinder. Die Durchmesser der beiden Drehzylinder sind unterschiedlich.

Darüber hinaus lässt sich die Ausführungsform mittels eines dritten Drehzylinders beschreiben, dessen Symmetrieachse der gemeinsamen Symmetrieachse entspricht, und dessen Mantelfläche durch das Zwischenstück verläuft. Das erste Seitenstück, die erste Dichtlippe, das zweite Seitenstück und die zweite Dichtlippe befinden sich außerhalb des dritten Drehzylinders. Innerhalb des dritten Drehzylinders befinden sich das dritte Seitenstück, die dritte Dichtlippe, das vierte Seitenstück und die vierte Dichtlippe. Der erste Hohlraum und die erste Öffnung verlaufen entsprechend außerhalb des dritten Drehzylinders, der zweite Hohlraum und die zweite Öffnung innerhalb des dritten Drehzylinders.

In einer ebenso bevorzugten alternativen Ausführungsform ist das schmierstoffleitende Element axial ausgerichtet. Der Schmierstoff wird also in axialer Richtung, das heißt parallel zu der gemeinsamen Symmetrieachse, geleitet. Bei dieser Ausführungsform liegen das erste Seitenstück, die erste Dichtlippe, das zweite Seitenstück und die zweite Dichtlippe auf einer anderen Seite einer radial, das heißt orthogonal zu der gemeinsamen Symmetrieachse, durch das Zwischenstück verlaufenden Ebene, als das dritte Seitenstück, die dritte Dichtlippe, das vierte Seitenstück und die vierte Dichtlippe. Entsprechend liegen auch der erste Hohlraum mit der ersten Öffnung und der zweite Hohlraum mit der zweiten Öffnung auf unterschiedlichen Seiten der Ebene. Insbesondere ist das schmierstoffleitende Element zu der Ebene spiegelsymmetrisch. Die Ausführungsform ist dadurch charakterisiert, dass die erste Öffnung und die zweite Öffnung jeweils die Form eines Kreisrings haben. Die beiden Kreisringe sind radial ausgerichtet, das heißt verlaufen orthogonal zu der gemeinsamen Symmetrieachse.

Vorzugsweise besteht das schmierstoffleitende Element mindestens teilweise, bevorzugt vollständig, aus Kunststoff, beispielsweise Perbunan (NBR), EPDM, Silikon (VOM oder MVQ), Viton (FPM oder FKM) oder PTFE.

Alternativ kann das schmierstoffleitende Element mindestens teilweise, auch vollständig, aus Metall, beispielsweise Stahl, Kupfer oder Aluminium, bestehen.

Besonders bevorzugt wird eine Ausführungsform in Mischbauweise, bei der das schmierstoffleitende Element teilweise aus Metall und teilweise aus Kunststoff besteht. Insbesondere die erste Dichtlippe, die zweite Dichtlippe, die dritte Dichtlippe und die vierte Dichtlippe können aus Kunststoff bestehen. Die übrigen, d.h. von der ersten Dichtlippe, der zweiten Dichtlippe, der dritten Dichtlippe und er vierten Dichtlippe verschiedenen Bereiche des schmierstoffleitenden Elements bestehen dabei vorzugsweise aus Metall. Auch ist es möglich, dass die erste Dichtlippe, die zweite Dichtlippe, die dritte Dichtlippe und die vierte Dichtlippe aus Metall bestehen, während die übrigen Bereiche des schmierstoffleitenden Elements aus Kunststoff bestehen.

Das schmierstoffleitende Element ist vorgesehen als ein erstes Element einer erfindungsgemäßen schmierstoffleitenden Vorrichtung. Die Vorrichtung umfasst darüber hinaus ein zweites Element mit einer ersten Nut, das heißt Rinne, Einkerbung oder Vertiefung, und ein drittes Element mit einer zweiten Nut.

Eine durch das zweite Element hindurchführende erste schmierstoffleitende Verbindung mündet in die erste Nut. Entsprechend mündet eine durch das dritte Element hindurchführende schmierstoffleitende Verbindung in die zweite Nut.

Das erste Seitenstück und das zweite Seitenstück greifen so in die erste Nut ein, dass die erste Dichtlippe entlang einer ersten Kontaktfläche und die zweite Dichtlippe entlang einer zweiten Kontaktfläche an der ersten Nut, beziehungsweise einer Wandung oder der Oberfläche der ersten Nut, anliegen. Die erste Nut, das erste Seitenstück, das zweite Seitenstück und das Zwischenstück umschließen dann einen dritten Hohlraum, der den ersten Hohlraum umfasst. Die erste Öffnung befindet sich innerhalb des dritten Hohlraums.

Das dritte Seitenstück und das vierte Seitenstück greifen so in die zweite Nut ein, dass die dritte Dichtlippe entlang einer dritten Kontaktfläche und die vierte Dichtlippe entlang einer vierten Kontaktfläche an der zweiten Nut, beziehungsweise einer Wandung oder der Oberfläche der ersten Nut, anliegen. Die zweite Nut, das dritte Seitenstück, das vierte Seitenstück und das Zwischenstück umschließen dann einen vierten Hohlraum, der den zweiten Hohlraum umfasst. Die zweite Öffnung befindet sich innerhalb des vierten Hohlraums.

Die Vorrichtung ist so ausgebildet, dass zwischen der ersten Dichtlippe und der ersten Nut sowie zwischen der zweiten Dichtlippe und der ersten Nut kein Schmierstoff aus dem dritten Hohlraum austreten kann. Entsprechend kann zwischen der dritten Dichtlippe und der zweiten Nut sowie zwischen der vierten Dichtlippe und der zweiten Nut kann kein Schmierstoff aus dem vierten Hohlraum austreten. Die erste Dichtlippe und die zweite Dichtlippe dichten den dritten Hohlraum also gegenüber der ersten Nut ab; die dritte Dichtlippe und die vierte Dichtlippe dichten den vierten Hohlraum gegenüber der zweiten Nut ab.

Als vorteilhaft hat sich vor diesem Hintergrund erwiesen, dass das erste Element federnd ausgebildet ist, sodass das erste Seitenstück über die erste Dichtlippe entlang der ersten Kontaktfläche und das zweite Seitenstück über die zweite Dichtlippe entlang der zweiten Kontaktfläche eine Federkraft auf die erste Nut ausüben, und sodass das dritte Seitenstück über die dritte Dichtlippe entlang der dritten Kontaktfläche und das vierte Seitenstück über die vierte Dichtlippe entlang der vierten Kontaktfläche eine Federkraft auf die zweite Nut ausüben.

Das erste Seitenstück, das zweite Seitenstück, das dritte Seitenstück, das vierte Seitenstück, die erste Dichtlippe, die zweite Dichtlippe, die dritte Dichtlippe, die vierte Dichtlippe, das Zwischenstück, die erste Schnittfläche, die zweite Schnittfläche, die dritte Schnittfläche, die vierte Schnittfläche, der erste Hohlraum, der zweite Hohlraum, der dritte Hohlraum, der vierte Hohlraum, die erste Öffnung, die zweite Öffnung, die erste Nut, die zweite Nut, die erste Kontaktfläche, die zweite Kontaktfläche, die dritte Kontaktfläche und die vierte Kontaktfläche verlaufen rotationssymmetrisch um eine gemeinsame Symmetrieachse.

Durch die durch das zweite Element hindurchführende schmierstoffleitende Verbindung kann Schmierstoff in den dritten Hohlraum und damit auch in den ersten Hohlraum eingeleitet werden. Da das Loch in dem Zwischenstück den ersten Hohlraum und den zweiten Hohlraum schmierstoffleitend miteinander verbindet, verbindet es auch den dritten Hohlraum und den vierten Hohlraum schmierstoffleitend miteinander. Somit gelangt der Schmierstoff durch das Loch von dem dritten Hohlraum in den vierten Hohlraum. Von dort fließt der Schmierstoff durch die durch das dritte Element hindurchführende schmierstoffleitende Verbindung.

Wird der Schmierstoff mit einem Druck beaufschlagt, bewirkt dies eine nach außen wirkende Kraft auf das erste Seitenstück, das zweite Seitenstück, das dritte Seitenstück und das vierte Seitenstück. Diese Kraft überträgt sich auf die erste Dichtlippe, die zweite Dichtlippe, die dritte Dichtlippe und die vierte Dichtlippe. Die erste Dichtlippe und die zweite Dichtlippe werden infolgedessen gegen die erste Nut gedrückt. Entsprechend werden die dritte Dichtlippe und die vierte Dichtlippe gegen die zweite Nut gedrückt. Dies verbessert die Abdichtung entlang der ersten Kontaktfläche, der zweiten Kontaktfläche, der dritten Kontaktfläche und der vierten Kontaktfläche.

Ein X-förmiger Querschnitt des ersten Elements verhindert eine Auswölbung des erstes Seitenstücks, des zweiten Seitenstücks, des dritten Seitenstücks und des vierten Seitenstücks nach außen und erhöht dadurch die Widerstandsfähigkeit des ersten Elements gegenüber Druck.

Die schmierstoffleitende Vorrichtung kann axial oder radial ausgerichtet sein. Bei einer axial ausgerichteten schmierstoffleitenden Vorrichtung sind das erste Element, das zweite Element und das dritte Element axial ausgerichtet, sodass der Schmierstoff in axialer Richtung, das heißt parallel zu der gemeinsamen Symmetrieachse, geleitet wird. Dabei liegen das erste Seitenstück, die erste Dichtlippe, das zweite Seitenstück, die zweite Dichtlippe und das zweite Element auf einer anderen Seite einer radial, das heißt orthogonal zu der gemeinsamen Symmetrieachse, durch das Zwischenstück verlaufenden Ebene, als das dritte Seitenstück, die dritte Dichtlippe, das vierte Seitenstück, die vierte Dichtlippe und das dritte Element. Entsprechend liegen auch der dritte Hohlraum und der vierte Hohlraum auf unterschiedlichen Seiten der Ebene. Bevorzugt sind weiterhin das zweite Element und das dritte Element bezüglich der Ebene spiegelsymmetrisch.

Um die radial ausgerichtete schmierstoffleitende Vorrichtung montieren zu können, sind bevorzugt das zweite Element und/oder das dritte Element mindestens zweistückig, bestehend mindestens aus einem ersten Stück und einem zweiten Stück, ausgebildet. Das erste Stück und das zweite Stück können etwa durch Verschrauben, Verkleben oder Verschweißen zusammengefügt werden.

Wenn die schmierstoffleitende Verbindung radial ausgerichtet ist, sind auch das erste Element, das zweite Element und das dritte Element radial ausgerichtet, sodass der Schmierstoff in axialer Richtung, das heißt orthogonal zu der gemeinsamen Symmetrieachse, geleitet wird. Ein erster Bereich des ersten Elements, bestehend aus dem ersten Seitenstück, der ersten Dichtlippe, dem zweiten Seitenstück und der zweiten Dichtlippe, und das zweite Element verlaufen dabei in radialer Richtung um einen zweiten Bereich des ersten Elements und das dritte Element wobei der zweite Bereich aus dem dritten Seitenstück, der dritten Dichtlippe, dem vierten Seitenstück und der vierten Dichtlippe besteht. Zwischen den beiden Bereichen des ersten Elements ist das Zwischenstück angeordnet.

Da das erste Element, das zweite Element und das dritte Element gegenüber einer gemeinsamen Symmetrieachse rotationssymmetrisch sind, ist es möglich, das erste Element gegenüber dem zweiten Element um eine erste Rotationsachse und das zweite Element gegenüber dem dritten Element um eine zweite Rotationsachse zu verdrehen. Die erste Rotationsachse und die zweite Rotationsachse verlaufen dabei entlang der gemeinsamen Symmetrieachse. Die drei Achsen sind also identisch. Insbesondere ist es möglich, das erste Element gegenüber dem dritten Element um die gemeinsame Symmetrieachse zu verdrehen, während das erste Seitenstück und das zweite Seitenstück wie oben beschrieben in die erste Nut eingreifen, und das dritte Seitenstück und das vierte Seitenstück wie oben beschrieben in die zweite Nut eingreifen.

Die schmierstoffleitende Vorrichtung ist somit geeignet, Schmierstoff zwischen einem ersten, sich drehenden Getriebeteil und einem zweiten, drehfest angeordneten Getriebeteil zu leiten. Entsprechend ist das erste Element in einer bevorzugten Ausführungsform so ausgebildet, dass es an dem ersten Getriebeteil angebracht werden kann, während das zweite Element so ausgebildet ist, dass es an dem zweiten Getriebeteil angebracht werden kann. Die Drehung des ersten Getriebeteils erfolgt dabei um die gemeinsame Symmetrieachse. Auch ist eine drehbare Ausgestaltung des zweiten Getriebeteils möglich, bei der sich das zweite Getriebeteil ebenso um die gemeinsame Symmetrieachse dreht.

Bei dem zweiten Element und bei dem ersten Getriebeteil und/oder bei dem dritten Element und dem zweiten Getriebeteil kann es sich jeweils um zwei verschiedene Stücke handeln. Darüber hinaus sind Ausführungsformen denkbar, bei denen das zweite Element einstückig mit dem ersten Getriebeteil verbunden ist und/oder das dritte Element einstückig mit dem zweiten Getriebeteil verbunden ist. Das erste Getriebeteil bildet also das zweite Element und/oder das zweite Getriebeteil bildet das dritte Element. Dabei weist das erste Getriebeteil die erste Nut und/oder das zweite Getriebeteil die zweite Nut auf.

Die Paarung aus dem ersten Getriebeteil und dem zweiten Getriebeteil kann gebildet werden durch einen Planetenträger und ein Gehäuse, eine Welle und ein Gehäuse oder einen Planetenträger und eine Sonnenradwelle. Insbesondere kann es sich dabei um Getriebeteile eines Getriebes einer Windkraftanlage handeln.

Das erste Element, das zweite Element und/oder das dritte Element bestehen vorzugsweise aus Kunststoff. Besonders bevorzugt wird eine Ausführungsform, bei der das erste Element, das zweite Element und das dritte Element aus Kunststoff bestehen. Gegenüber einer gemäß dem Stand der Technik üblichen Kunststoff-Metall-Paarung verringert dies den Verschleiß entlang der ersten Kontaktfläche, der zweiten Kontaktfläche, der dritten Kontaktfläche und der vierten Kontaktfläche. Auch die Dichtigkeit der Vorrichtung verbessert sich.

In den Figuren dargestellte Ausführungsbeispiele der Erfindung werden im Folgenden näher erläutert. Dabei kennzeichnen übereinstimmende Bezugszeichen gleiche oder funktionsgleiche Merkmale. Im Einzelnen zeigt:
- Fig. 1: einen schmierstoffleitenden X-Ring;
- Fig. 2: den X-Ring im Querschnitt;
- Fig. 3: den X-Ring mit einem inneren und einem äußeren Nutring;
- Fig. 4: einen Querschnitt des inneren und des äußeren Nutrings;
- Fig. 5: einen Querschnitt des inneren und des äußeren Nutrings mit montiertem X-Ring; und
- Fig. 6: eine Anordnung in axialer Ausrichtung.

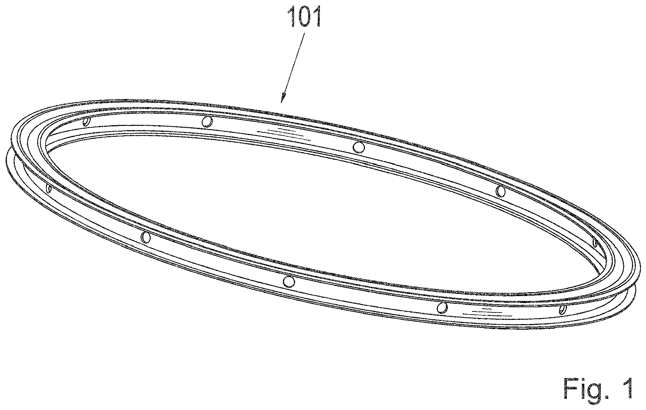

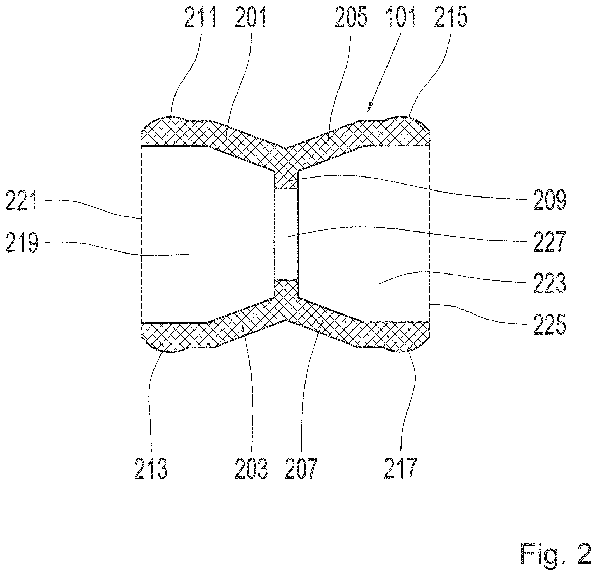

In Fig. 1 ist eine perspektivische Ansicht eines schmierstoffleitenden X-Rings 101 dargestellt. Dessen Aufbau verdeutlicht die in Fig. 2 dargestellte Querschnittsansicht.

Der X-Ring 101 besteht aus einem ersten Seitenstück 201, einem zweiten Seitenstück 203, einem dritten Seitenstück 205, einem vierten Seitenstück 207 und einem Zwischenstück 209. Am äußeren Rand des ersten Zwischenstücks 201 verläuft eine erste Dichtlippe 211, am äußeren Rand des zweiten Seitenstücks 203 eine zweite

Dichtlippe 213, am äußeren Rand des dritten Seitenstücks 205 eine dritte Dichtlippe 215 und am äußeren Rand des vierten Seitenstücks 207 eine vierte Dichtlippe 217.

Das erste Seitenstück 201, das Zwischenstück 209 und das zweite Seitenstück 203 verlaufen um einen ersten Hohlraum 219. Die erste Dichtlippe 211 und die zweite Dichtlippe 213 bilden eine Mündung 221 des ersten Hohlraums 219.

Das dritte Seitenstück 205, das Zwischenstück 209 und das vierte Seitenstück 207 verlaufen um einen zweiten Hohlraum 223. Die dritte Dichtlippe 215 und die vierte Dichtlippe 217 bilden eine Mündung 225 des zweiten Hohlraums 223.

Das Zwischenstück 209 weist eine Vielzahl von Durchgangsbohrungen 227 auf. Durch die Durchgangsbohrungen 227 kann Schmierstoff von dem ersten Hohlraum 219 in den zweiten Hohlraum 223 und von dem zweiten Hohlraum 223 in den ersten Hohlraum 219 fließen. Die Durchgangsbohrungen 227 verbinden also den ersten Hohlraum 219 und den zweiten Hohlraum 223 schmierstoffleitend miteinander.

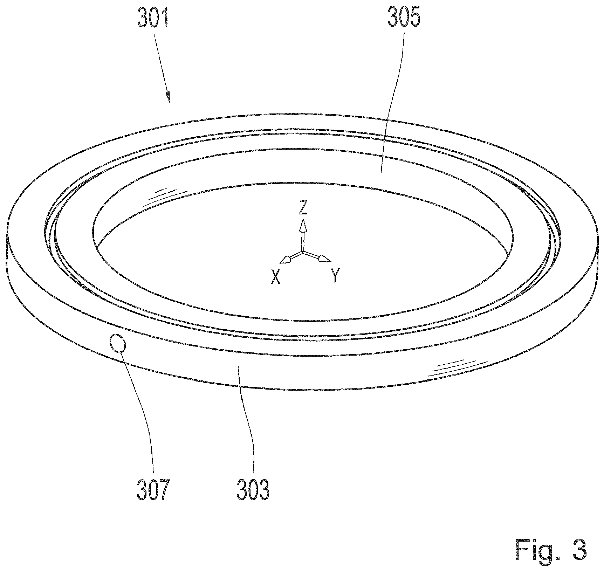

Eine schmierstoffleitende Vorrichtung 301 in zusammengebautem Zustand zeigt Fig. 3. Die schmierstoffleitende Vorrichtung 301 besteht aus dem X-Ring 101, einem äußeren, ersten Nutring 303 und einem inneren, zweiten Nutring 305. Der X-Ring 101 befindet sich zwischen dem ersten Nutring 303 und dem zweiten Nutring 305 und ist daher in Fig. 3 nicht erkennbar. Zum Ein- und/oder Ausleiten von Schmierstoff ist der erste Nutring 303 mit einer Durchgangsbohrung 307 versehen.

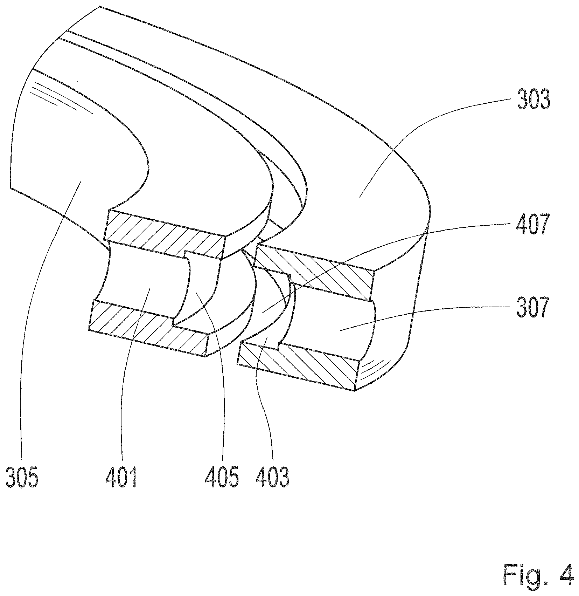

Fig. 4 stellt dieselbe schmierstoffleitende Vorrichtung 301 im Querschnitt ohne den X-Ring 101 dar. Zu erkennen ist hier, dass auch der zweite Nutring 305 mit einer Durchgangsbohrung 401 zum Ein- und/oder Ausleiten von Schmierstoff versehen ist.

Der erste Nutring 303 weist an seiner Innenseite eine erste Nut 403 auf. Analog weist der zweite Nutring 305 an seiner Außenseite eine zweite Nut 405 auf. Die erste Nut 403 ist also gegenüber dem ersten Nutring 303 nach innen gerichtet, während die zweite Nut 405 ist gegenüber dem zweiten Nutring 305 nach außen gerichtet ist. Entsprechend sind die erste Nut 403 und die zweite Nut 405 zueinander ausgerichtet.

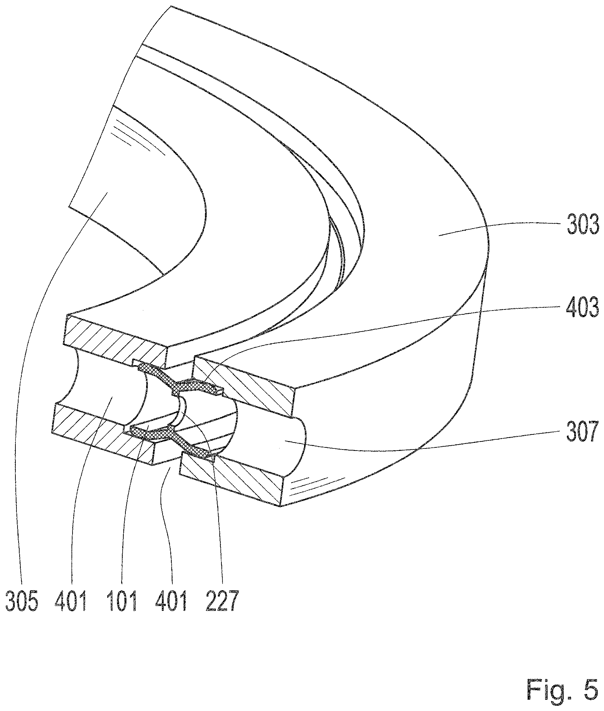

Zwischen dem ersten Nutring 303 und dem zweiten Nutring 305 verläuft ein Spalt 407. Diesen Spalt 407 dichtet der in Fig. 5 dargestellte X-Ring 101 nach außen hin ab. Zwischen der Durchgangsbohrung 307 in dem ersten Nutring 303, der ersten Nut 403, dem zweiten Hohlraum 223, den Durchgangsbohrungen 227 des X-Rings 101, dem ersten Hohlraum 219, der zweiten Nut 405 und der Durchgangsbohrung 401 des zweiten Nutrings 305 stellt der X-Ring 101 eine schmierstoffleitende Verbindung her. Der Schmierstoff kann durch die Durchgangsbohrung 307 des ersten Nutrings 303 in die erste Nut 403, von dort in den zweiten Hohlraum 223, von dort durch die Durchgangsbohrungen 227 des X-Rings 101 in den ersten Hohlraum 219, von dort in die zweite Nut 205 und von dort durch die Durchgangsbohrung 401 des zweiten Nutrings 305 fließen. Umgekehrt kann der Schmierstoff auch durch die Durchgangsbohrung 401 des zweiten Nutrings 305 in die zweite Nut 305, von dort in den ersten Hohlraum 219, von dort durch die Durchgangsbohrungen 227 des X-Rings 101 in den zweiten Hohlraum 223, von dort in die erste Nut 403 und von dort durch die Durchgangsbohrung 307 des ersten Nutrings 303 fließen.

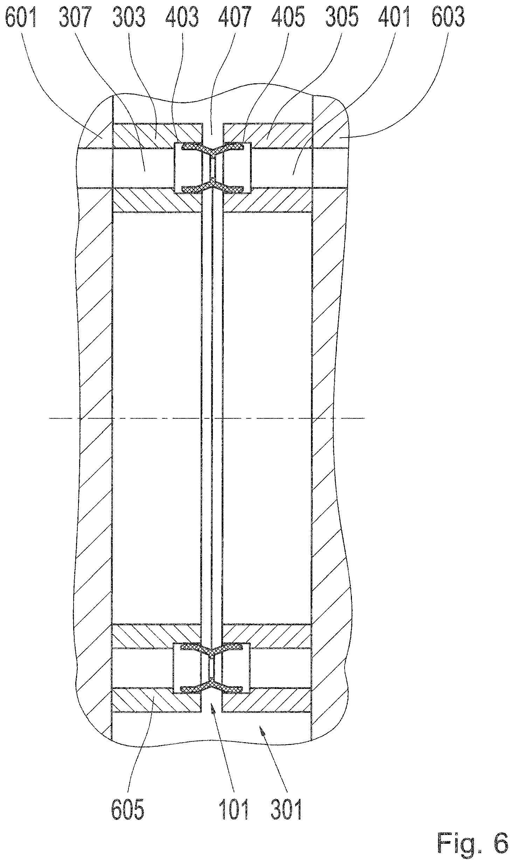

Die schmierstoffleitende Vorrichtung 301 kann radial oder axial ausgerichtet sein. Die Fig. 1 und 3 bis 5 zeigen einen X-Ring 101 beziehungsweise eine schmierstoffleitende Vorrichtung 301 in radialer Ausrichtung. Eine schmierstoffleitende Verbindung 301 in axialer Ausrichtung hingegen zeigt Fig. 6.
Die Darstellung des Querschnitts in Fig. 2 trifft sowohl für einen X-Ring 101 in radialer Ausrichtung als auch in axialer Ausrichtung zu.

Ein erstes Getriebeteil 601 und ein zweites Getriebeteil 603 sind entsprechend Fig. 6 gegeneinander verdrehbar. Zwischen dem ersten Getriebeteil 601 und dem zweiten Getriebeteil 603 verläuft in radialer Richtung ein Spalt 605. In dem Spalt 605 ist die schmierstoffleitende Vorrichtung 301 angeordnet.

Der erste Nutring 301 und der zweite Nutring 305 sind entlang einer radial, d. h. orthogonal zu der Drehachse des ersten Nutrings 301 und/oder des zweiten Nutrings 305, mittig zwischen dem ersten Nutring 301 und dem zweiten Nutring 305 verlaufenden Ebene spiegelsymmetrisch zueinander. Die erste Nut 403 ist ebenso wie die zweite Nut 405 seitwärts, d. h. axial bzw. parallel zu der Drehachse des ersten Nutrings 301 und/oder des zweiten Nutrings 305, ausgerichtet. Der X-Ring 101 dichtet den zwischen dem ersten Nutring 303 und dem zweiten Nutring 305 verlaufenden Spalt 407 nach außen hin ab. Der Schmierstofffluss zwischen der Durchgangsbohrung 307 des ersten Nutrings 305 und der Durchgangsbohrung 401 des zweiten Nutrings 305 erfolgt wie oben beschrieben, allerdings nicht in radialer Richtung, sondern in axialer Richtung.

### Bezugszeichen

- 101: X-Ring
- 201: Seitenstück
- 203: Seitenstück
- 205: Seitenstück
- 207: Seitenstück
- 209: Zwischenstück
- 211: Dichtlippe
- 213: Dichtlippe
- 215: Dichtlippe
- 217: Dichtlippe
- 219: Hohlraum
- 221: Mündung
- 223: Hohlraum
- 225: Mündung
- 227: Durchgangsbohrung
- 301: Vorrichtung
- 303: Nutring
- 305: Nutring
- 307: Durchgangsbohrung
- 401: Durchgangsbohrung
- 403: Nut
- 405: Nut
- 407: Spalt
- 601: Getriebeteil
- 603: Getriebeteil
- 605: Spalt

## Patentansprüche

1. Schmierstoffleitende Vorrichtung (301); wobei
die schmierstoffleitende Vorrichtung (301) ein erstes Element (101) aufweist; wobei das erste Element (101) ein erstes Seitenstück (201) aufweist, das eine erste Dichtlippe (211) ausbildet;
das erste Element (101) ein zweites Seitenstück (203) aufweist, das eine zweite Dichtlippe (213) ausbildet;
das erste Element (101) ein Zwischenstück (209) aufweist, das mit mindestens einem Loch (227) versehen ist; wobei
das erste Seitenstück (201) entlang einer ersten Schnittfläche in das Zwischenstück (209) übergeht; wobei
das zweite Seitenstück (203) entlang einer zweiten Schnittfläche in das Zwischenstück (209) übergeht; wobei
das erste Seitenstück (201), das zweite Seitenstück (203) und das Zwischenstück (209) einen ersten Hohlraum (219) mit einer ersten von dem Loch (227) verschiedenen Öffnung (221) bilden; wobei
das erste Element (101) ein drittes Seitenstück (205) aufweist, das eine dritte Dichtlippe (215) ausbildet; wobei
das erste Element (101) ein viertes Seitenstück (207) aufweist, das eine vierte Dichtlippe (217) ausbildet; wobei
das dritte Seitenstück (205) entlang einer dritten Schnittfläche in das Zwischenstück (209) übergeht; wobei
das vierte Seitenstück (207) entlang einer vierten Schnittfläche in das Zwischenstück (209) übergeht; wobei
das dritte Seitenstück (205), das vierte Seitenstück (207) und das Zwischenstück (209) einen zweiten Hohlraum (223) mit einer zweiten von dem Loch (227) verschiedenen Öffnung (225) bilden; und wobei
das Loch (227) den ersten Hohlraum (219) und den zweiten Hohlraum (223) schmierstoffleitend miteinander verbindet; **gekennzeichnet durch** ein zweites Element (303) mit einer ersten Nut (403); und durch
ein drittes Element (305) mit einer zweiten Nut (405); wobei
mindestens eine durch das zweite Element (303) hindurchführende schmierstoffleitende Verbindung (307) in die erste Nut (403) mündet; wobei
mindestens eine durch das dritte Element (305) hindurchführende schmierstoffleitende Verbindung (401) in die zweite Nut (405) mündet; wobei
das erste Seitenstück (201) und das zweite Seitenstück (203) so in die erste Nut (403) eingreifen, dass die erste Dichtlippe (211) entlang einer ersten Kontaktfläche und die zweite Dichtlippe (213) entlang einer zweiten Kontaktfläche an der ersten Nut (403) anliegt; wobei
das dritte Seitenstück (205) und das vierte Seitenstück (207) so in die zweite Nut (405) eingreifen, dass die dritte Dichtlippe (215) entlang einer dritten Kontaktfläche und die vierte Dichtlippe (217) entlang einer vierten Kontaktfläche an der zweiten Nut (405) anliegt; wobei
das erste Seitenstück (201), das zweite Seitenstück (203), das dritte Seitenstück (205), das vierte Seitenstück (207), die erste Dichtlippe (211), die zweite Dichtlippe (213), die dritte Dichtlippe (215), die vierte Dichtlippe (217), das Zwischenstück (209), die erste Schnittfläche, die zweite Schnittfläche, die dritte Schnittfläche, die vierte Schnittfläche, der erste Hohlraum (219), der zweite Hohlraum (223), die erste Öffnung (221), die zweite Öffnung (225), die erste Nut (403), die zweite Nut (405), die erste Kontaktfläche, die zweite Kontaktfläche, die dritte Kontaktfläche und die vierte Kontaktfläche rotationssymmetrisch um eine gemeinsame Symmetrieachse verlaufen; wobei
das zweite Element (303) an einem ersten Getriebeteil (601) angebracht werden kann; und wobei
das dritte Element (305) an einem zweiten Getriebeteil (603) angebracht werden kann.

2. Vorrichtung (301) nach Anspruch 1, **dadurch gekennzeichnet, dass**
das zweite Element (303) und/oder das dritte Element (307) aus Kunststoff bestehen.

## Claims

1. Lubricant-conducting apparatus (301);
the lubricant-conducting apparatus (301) having a first element (101); the first element (101) having a first side piece (201) which configures a first sealing lip (211) ;
the first element (101) having a second side piece (203) which configures a second sealing lip (213);
the first element (101) having an intermediate piece (209) which is provided with at least one hole (227); the first side piece (201) merging along a first sectional face into the intermediate piece (209);
the second side piece (203) merging along a second sectional face into the intermediate piece (209);
the first side piece (201), the second side piece (203) and the intermediate piece (209) forming a first cavity (219) with a first opening (221) which is different from the hole (227);
the first element (101) having a third side piece (205) which configures a third sealing lip (215);
the first element (101) having a fourth side piece (207) which configures a fourth sealing lip (217);
the third side piece (205) merging along a third sectional face into the intermediate piece (209);
the fourth side piece (207) merging along a fourth sectional face into the intermediate piece (209);
the third side piece (205), the fourth side piece (207) and the intermediate piece (209) forming a second cavity (223) with a second opening (225) which is different from the hole (227); and
the hole (227) connecting the first cavity (219) and the second cavity (223) to one another in a lubricant-conducting manner; **characterized by**
a second element (303) with a first groove (403); and by
a third element (305) with a second groove (405);
at least one lubricant-conducting connection (307) which leads through the second element (303) opening into the first groove (403);
at least one lubricant-conducting connection (401) which leads through the third element (305) opening into the second groove (405);
the first side piece (201) and the second side piece (203) engaging into the first groove (403) in such a way that the first sealing lip (211) bears against the first groove (403) along a first contact face, and the second sealing lip (213) bears against the first groove (403) along a second contact face;
the third side piece (205) and the fourth side piece (207) engaging into the second groove (405) in such a way that the third sealing lip (215) bears against the second groove (405) along a third contact face, and the fourth sealing lip (217) bears against the second groove (405) along a fourth contact face;
the first side piece (201), the second side piece (203), the third side piece (205), the fourth side piece (207), the first sealing lip (211), the second sealing lip (213), the third sealing lip (215), the fourth sealing lip (217), the intermediate piece (209), the first sectional face, the second sectional face, the third sectional face, the fourth sectional face, the first cavity (219), the second cavity (223), the first opening (221), the second opening (225), the first groove (403), the second groove (405), the first contact face, the second contact face, the third contact face and the fourth contact face running in a rotationally symmetrical manner about a common axis of symmetry;
it being possible for the second element (303) to be attached to a first transmission part (601); and
it being possible for the third element (305) to be attached to a second transmission part (603).

2. Apparatus (301) according to Claim 1, **characterized in that**
the second element (303) and/or the third element (307) consist/consists of plastic.

## Revendications

1. Dispositif conducteur de lubrifiant (301) ;
le dispositif conducteur de lubrifiant (301) comportant un premier élément (101) ; le premier élément (101) comportant une première pièce latérale (201), qui forme une première lèvre d'étanchéité (211) ;
le premier élément (101) comportant une deuxième pièce latérale (203), qui forme une deuxième lèvre d'étanchéité (213) ;
le premier élément (101) comportant une pièce intermédiaire (209), qui est munie d'au moins un trou (227) ;
la première pièce latérale (201) passant le long d'une première surface de coupe dans la pièce intermédiaire (209) ;
la deuxième pièce latérale (203) passant le long d'une deuxième surface de coupe dans la pièce intermédiaire (209) ;
la première pièce latérale (201), la deuxième pièce latérale (203) et la pièce intermédiaire (209) formant une première cavité (219) pourvue d'un premier orifice (221), différent du trou (227) ;
le premier élément (101) comportant une troisième pièce latérale (205) qui forme une troisième lèvre d'étanchéité (215) ;
le premier élément (101) comportant une quatrième pièce latérale (207) qui forme une quatrième lèvre d'étanchéité (217) ;
la troisième pièce latérale (205) passant le long d'une troisième surface de coupe dans la pièce intermédiaire (209) ;
la quatrième pièce latérale (207) passant le long d'une quatrième surface de coupe dans la pièce intermédiaire (209) ;
la troisième pièce latérale (205), la quatrième pièce latérale (207) et la pièce intermédiaire (209) formant une deuxième cavité (223) pourvue d'un deuxième orifice (225), différent du trou (227) ; et
le trou (227) reliant l'une à l'autre par liaison conductrice de lubrifiant la première cavité (219) et la deuxième cavité (223) ; **caractérisé par** un deuxième élément (303) pourvu d'une première rainure (403) ; et par
un troisième élément (305) pourvu d'une deuxième rainure (405) ;
au moins une liaison conductrice de lubrifiant (307) qui traverse le deuxième élément (303) débouchant dans la première rainure (403) ;
au moins une liaison conductrice de lubrifiant (401) qui traverse le troisième élément (305) débouchant dans la deuxième rainure (405) ;
la première pièce latérale (201) et la deuxième pièce latérale (203) s'engageant dans la première rainure (403), de telle sorte que la première lèvre d'étanchéité (211) s'appuie le long d'une première surface de contact et la deuxième lèvre d'étanchéité (213) s'appuie le long d'une deuxième surface de contact sur la première rainure (403) ;
la troisième pièce latérale (205) et la quatrième pièce latérale (207) s'engageant dans la deuxième rainure (405), de telle sorte que la troisième lèvre d'étanchéité (215) s'appuie le long d'une troisième surface de contact et la quatrième lèvre d'étanchéité (217) s'appuie le long d'une quatrième surface de contact sur la deuxième rainure (405) ;
la première pièce latérale (201), la deuxième pièce latérale (203), la troisième pièce latérale (205), la quatrième pièce latérale (207), la première lèvre d'étanchéité (211), la deuxième lèvre d'étanchéité (213), la troisième lèvre d'étanchéité (215), la quatrième lèvre d'étanchéité (217), la pièce intermédiaire (209), la première surface de coupe, la deuxième surface de coupe, la troisième surface de coupe, la quatrième surface de coupe, la première cavité (219), la deuxième cavité (223), le premier orifice (221), le deuxième orifice (225), la première rainure (403), la deuxième rainure (405), la première surface de contact, la deuxième surface de contact, la troisième surface de contact et la quatrième surface de contact s'écoulant de manière symétrique en rotation autour d'un axe de symétrie commun ;
le deuxième élément (303) pouvant se monter sur une première pièce de transmission (601) ; et
le troisième élément (305) pouvant se monter sur une deuxième pièce de transmission (603).

2. Dispositif (301) selon la revendication 1, **caractérisé en ce que**
le deuxième élément (303) et/ou le troisième élément (307) sont en matière plastique.
